# EUROPEAN PATENT APPLICATION

(11) **EP 3 741 672 A1**
(43) Date of publication of application: **25.11.2020**
(21) Application number: 19176369.7
(22) Date of filing: 24.05.2019
(51) Int. Cl.: B64C 27/52, B64C 27/68, B64C 27/72, B64C 27/35

(54) **HELICOPTER**

(71) Applicant: Antonov Engineering GmbH, 1190 Vienna (AT)
(72) Inventor: ANTONOV, Kostyantin, 1190 Vienna (AT); PONIKAREVYCH, Oleksandr, 49005 DNIPRO (UA); TKACHENKO, Yevhen, 69120 ZAPORIZHZHIA (UA)
(74) Representative: Babeluk, Michael

(57) **Abstract**

A helicopter, comprising a fuselage (20), at least one electric main motor (9) and a main rotor (25) connected to the main motor (9) by a drive shaft (27), wherein the fuselage (20) comprises at least one cabin (21) and wherein the main rotor (25) comprises a rotor head (1) and at least two rotor blades (6) connected to the rotor head (1) and wherein at least two of the rotor blades (6) have electrically actuated axial pitch control devices (5), **characterised in that** the drive shaft (27) comprises an upper section (27a) connected to the rotor head (1) and a lower section (27b) connected to the main motor (9) and that a flexible joint (7) connects the lower section (27b) and the upper section (27a).

## Description

The present invention relates to a helicopter, comprising a fuselage, at least one electric main motor and a main rotor connected to the main motor by a drive shaft, wherein the fuselage comprises at least one cabin and wherein the main rotor comprises a rotor head and at least two rotor blades connected to the rotor head and wherein at least two of the rotor blades have electrically actuated axial pitch control devices.

Helicopters are mainly used for transportation of persons and goods and normally comprise at least one main rotor, which is rotated by one or more engines as a main motor and also at least one tail rotor. The main motor is typically a combustion engine which produces not only exhaust gas but also a high amount of noise pollution of the surroundings. As the operation of a helicopter already is very loud due to the rotating main rotor, this is especially unfavourable.

Most helicopters adjust the pitch angle of their rotor blades by mechanical devices like swash plates. Therefore, the inclination angle of each rotor blade can be adjusted during rotation, for example for manoeuvring the helicopter and for flying forward. During forward flight, the whole main rotor also pitches in the desired direction and with the main rotor the helicopter as a whole pitches. However, this also results in tilting the cabin - meaning lowering the front of the fuselage in the direction of the ground, which is uncomfortable for the pilot and other passengers if present. The fuselage of the helicopter normally has a shape that is especially aerodynamic if the airstream comes mainly from the front during forward flight. However, as the pitch angle of the fuselage depends on the velocity of the helicopter in forward flight, the aerodynamics of the fuselage changes, thus resulting in increased air drag. Also, the stability of flight is deteriorated due to this fact. These structures are very complex, and thus are difficult to assemble, expensive, require a lot of maintenance and a high amount of space in the area of the rotor axle of the main rotor.

The WO 2018/045253 A1 describes a main rotor assembly for a helicopter that provides an electric main motor for propelling pitch motors for setting and adjusting the pitch of the rotor blades. Therefore, the axial pitch control devices can be simplified and also their adjustment can be actuated faster. Also, the pitch angle of each rotor blade can be adjusted any time, independent of its current relative radial position around the rotor head. This also simplifies the structure of the main rotor and the rotor axle. In addition, it reduces the noise pollution as electric motors are less noisy then combustion engines and improves the flight stability. This enhances the comfort of the pilot and passengers. However, the flight stability may still be insufficient.

It is an object of the present invention to provide a simple structure of the helicopter and a better stability of flight and to enable a more comfortable flight experience.

This object is achieved by the fact that the drive shaft comprises an upper section connected to the rotor head and a lower section connected to the main motor and that a flexible joint connects the lower section and the upper section.

Compared to an internal combustion engine or a gas turbine engine, there are no complicated structures in an electric motor, thus it increases reliability and reduces size and weight. At the same time, the electric motor has an excellent torque and almost instantaneous acceleration to maximum speed. Fuel and lubricants, gasoline, kerosene, engine oils are not to be used. Power management and the absence of a complex control system increases reliability and safety of flights. The installation of electric motors is preferably performed in the power plant section at the installation units, ensuring their reliable fastening to the fuselage and damping vibrations transmitted from the rotating parts of the power plant and the carrier system to the fuselage design to ensure comfort to the crew and passengers.

There can be only one main motor - preferably without gear - with the transmission of torque to the drive shaft through a freewheel clutch and preferably power offtake to the tail rotor, or two main motors with transmission of torque to the drive shaft through the main gear box and preferably power offtake to the tail rotor. Also, a possible embodiment could comprise four electric motors with transmission of torque to the drive shaft through a main gear box.

The flexible joint enables the main rotor to tilt while the rest of the helicopter remains essentially in the same angle to the ground. This enables a more stable flight which is more comfortable for the pilot and passengers. The aerodynamics of the fuselage are essentially the same, regardless of the velocity during forward flight, thus additionally stabilizing the flight behaviour.

The flexible connection allows the carrying rotor to be tilted to form a hinge. This ensures that no bending moment is transferred from the carrying rotor to the main gearbox (if provided), or the bearing of the drive shaft.

The combination of electrically actuated axial pitch control devices with the flexible joint is especially advantageous, as they simplify the structure of the main rotor in the area of the hub and therefore makes it easier to arrange the flexible joint. Surprisingly, the combination of the electrically actuated axial pitch control devices with the flexible joint permits an especially increased flight stability due to the flexible and fast adjustment of the pitch angle provided by the axial pitch control devices and the constant aerodynamics of the fuselage.

The electrically actuated axial pitch control devices control the axial pitch of the rotor blades they are attached to. The axial pitch is the axial angle of the rotor blade in reference to the rotation plane of the rotor blades. Electrically actuated means that the pitch angle is adjusted by at least one electric motor, wherein a gear can be arranged in between the electric motor and the rotor blade.

The drive shaft transmits the torque provided by the main motor to the main rotor. Therefore, at least the upper section of the drive shaft also constitutes the rotational axis of the rotor.

The rotor head is the central part of the main rotor, connecting the rotor blades with the upper section.

Preferably, each rotor blade is connected to one axial pitch control device respectively.

The axial pitch control devices can comprise electric motors that are located in the rotor head or in or on the fuselage. These pitch motors are preferably servo motors. It is especially advantageous if each axial pitch control device comprises at least one pitch motor that is arranged coaxially with a main axle of at least one rotor blade. Therefore, the rotation and torque can be transmitted to the rotor blade directly, as the electric motors form part of the rotor head. A gear can be arranged between each electric motor and the rotor blades, respectively.

In a preferred embodiment, the flexible joint is a passive joint with a default position in an unstressed state and that the upper section and the lower section are coaxial in the default position. The transition from hover flight to forward flight can be induced by altering the pitch angle of the rotor blades depending on their current relative position during their rotation. Therefore, there doesn't have to be a complex adjustment mechanism for adjusting the angle between the rotor and the fuselage. The high weight of the parts of the helicopter that are attached to the lower section and the forces produced by the rotor due to its rotation set the angle between the upper section and lower section. As the helicopter has to start normally by engaging a hover flight, it is advantageous if the default position, that is the position of the passive joint if no external forces are applied to it, is a coaxial position of the upper section and lower section, as in this state the helicopter can lift off from the ground easily.

If the flexible joint comprises at least one elastic element arranged between the upper section and the lower section, this elastic element can set the default position but still allows the flexible joint to bend if force is applied to the upper and/or the lower section. The elastic element has to be elastically deformable and can therefore comprise a rubber element, an elastomeric element or a spring element.

It is advantageous if the flexible joint comprises an outer shaft and an inner shaft at least partially arranged inside the outer shaft and that the elastic element is arranged radially between the outer shaft and the inner shaft. The outer shaft can be connected with the lower section and the inner shaft connected with the upper section or the other way around. In the area where the inner shaft is arranged inside the outer shaft, the outer shaft can comprise a connection area with enlarged diameter to accommodate the inner shaft and the elastic element. The elastic element preferably extends around the inner shaft. Alternatively, a plurality of elastic elements can be provided that are arranged around the inner shaft. The inner shaft and outer shaft preferably are additionally connected via a torque transmitting articulation.

Also, it can be provided that the helicopter comprises a control unit for controlling the operation of the main motor and of the axial pitch control devices that is connected to the main motor and the axial pitch control devices and to at least one sensor. The control unit can adjust the pitch angle due to the measurements made from the sensor. The type of sensor can vary, depending on the data that needs to be collected. For example, a temperature sensor, altitude sensor, acceleration sensor, angle sensor or a combination of them could be advantageous.

If at least one sensor is a temperature sensor for detecting the ambient air temperature around the helicopter this information can be used to adjust the pitch angle and enhance the aerodynamic behaviour of the helicopter.

Also, if at least one sensor is a speed sensor, the pitch angles and the velocity of the helicopter can be regulated more accurately.

It is also advantageous if an energy supply device for at least the main rotor is located in the fuselage, under a passenger cabin. In other words, the cabin is located in between the main rotor and the energy supply device. As this device normally is very heavy, the center of gravity of the helicopter can be lowered, which increases manoeuvrability and flight stability. This energy supply device comprises preferably one or more batteries that are preferably rechargeable. Alternatively, also one or more fuel cells can be provided as part of the energy supply device.

It is advantageous if two compartments for the installation of two blocks of batteries are provided. The cavity of the compartment is preferably equipped with a fire protection system and filled with an inert gas that prevents fire outbreak inside the compartment.

If the helicopter comprises an autopilot unit and preferably a helicopter stabilization system, the work of the pilot can be facilitated, and the flight stability can be augmented.

Electrically controlled angle of axial pitch allows to carry out autopilot functions and preferably helicopter stabilization system preferably without any additional design elements (only by connecting to the control unit), which will facilitate the pilot's work and increase the stability of the flight.

The present invention will be explained below in closer detail by reference to an embodiment shown in the drawings, wherein:
- Fig. 1: shows a cross section of a helicopter in accordance with the invention;
- Fig. 2: a cross section of a detail of another embodiment of the invention;

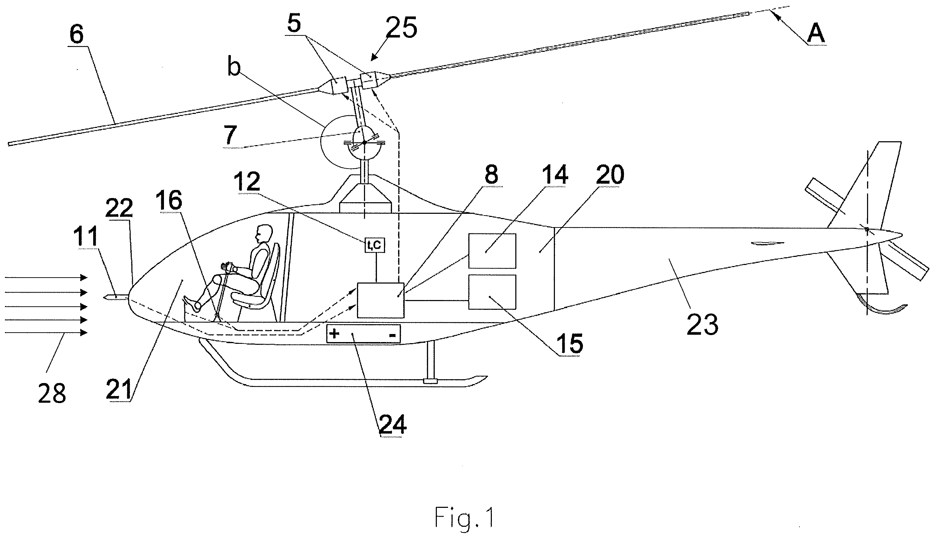

Fig. 1 shows a helicopter with a fuselage 20 and a cabin 21 inside the fuselage for accommodating the pilot and perhaps passengers. On one side the fuselage 20 comprises a nose 22 that marks the front of the helicopter and a tail boom 23 with a tail rotor that mark the rear of the helicopter. The tail rotor can be driven by a tail motor or by the main motor 8. Above the cabin a main rotor 25 with two rotor blades 6 is arranged. Under the cabin 21, landing skids for standing on the ground are provided. Inside the fuselage and under the cabin, an energy supply system 24 in form of a battery is arranged. The battery supplies a main motor 9 and the other devices of the helicopter with power.

The main motor 9 is arranged above the cabin 21 and directly under the rotor head 1 of the main rotor 25. The main motor 9 is connected with a drive shaft 27 that extends upwards out of the fuselage 20 and that is connected to the main rotor 25.

Alternatively, the helicopter can comprise two or more main motors 9 for driving the main rotor 25. Preferably, the main rotor 25 is driven by the one more main motors 9 through a gear.

The drive shaft 27 comprises an upper section 27a that is nearer to the main rotor 25 and a lower section 27b that is nearer to the fuselage 20. The upper section 27a and the lower section 27b are connected by a flexible joint 7 that is spaced from the main rotor 25. In this embodiment, the flexible joint 7 is approximately midway between the main rotor 25 and the main motor 9.

The main rotor 25 comprises two rotor blades 6 and a rotor head 1 that is connected to the upper section 27a of the drive shaft 27. Each rotor blade 6 is connected to the upper section 27a over an electrically actuated axial pitch control device 5 that can pitch the rotor blade 6 in respect to a longitudinal axis A of the rotor blade 6. Therefore, the inclination angle of each rotor blade 6 can be set by the axial pitch control device 5 connected to it.

A control unit 8 is connected to the main motor 9, the axial pitch control devices 5, to a control knob 16 inside the cabin 21 and to an air temperature sensor 12 for measuring the outside air temperature and a speed sensor 11. The measurements of these sensors 11, 12 and the position of the control knob 16 are received by the control unit 8 that calculates on basis of these signals the desired pitch angle of each rotor blade 6 in each position during rotation around the rotor head 1. Also, the rotation or pitch angles of the tail rotor can be preferably set by the control device 5.

The control device 5 is also connected to an autopilot unit 14, in case the pilot wants not to fly by himself, and to a helicopter stabilization system 15 for enhancing the flight stability.

During hover flight the upper section 27a and the lower section 27b are coaxial. During the transition to forward flight, that is the flight in the direction of the nose 22, the pitch angles of the rotor blades 6 are altered, depending on their relative position along their rotation around the rotor head 1. With the change in the pitch angle of the rotor blades 6 along their rotation and according to their relative position during that rotation, the helicopter is drawn in the direction of the nose, causing the rotor as a whole to pitch in the direction of the nose. Due to the weight of the fuselage and the parts inside of it, the joint 7 bends so that the upper section 27a and lower section 27b are not coaxial anymore. Therefore, a rotor pitch angle b between the upper section 27a and the lower section 27b occurs that is smaller than 180°. These explanations also apply if the pitch angle are changed differently so that the rotor pitches in another direction then towards the nose, e.g. towards on side of the helicopter.

This way, the fuselage that is during hover flight in an essentially horizontal position, can maintain this relative orientation to the ground or is pitched only to a very small extent. Thus, the pilot and the passengers inside the cabin 21 can experience a more comfortable flight. Also, air streams 28 coming from the front of the helicopter due to the forward flight hit the fuselage 20 essentially from the front, regardless of the velocity of the helicopter. This means that the direction of the air currents around the helicopter depends lesser on the velocity of the helicopter, allowing a more efficient aerodynamic design of the form of the fuselage and a higher flight stability.

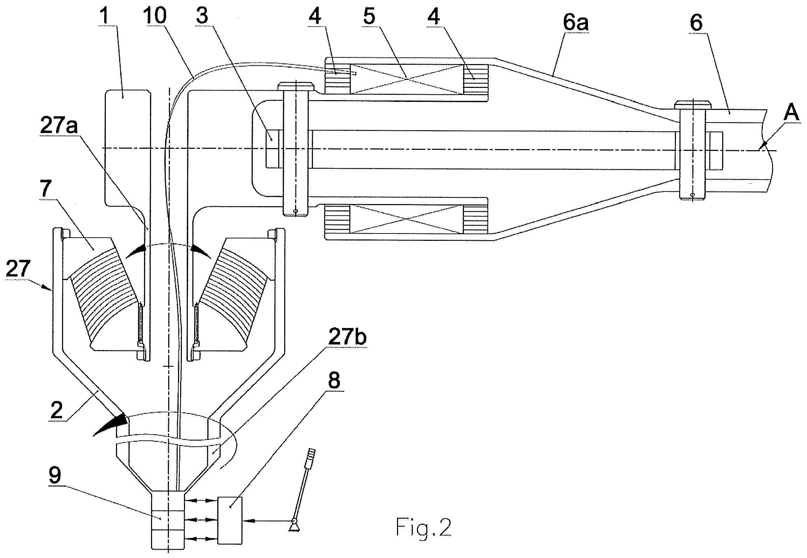

Fig. 2 shows a detailed view of the drive shaft 27 and the rotor 25 of another embodiment of the invention. The rotor 25 comprises two opposing rotor blades 6, but only one rotor blade 6 is shown in this figure. The rotor blade 6 comprises an elongated main part with an airfoil shape for providing uplift. In the area of the rotor head 1 the rotor blade 6 is rotatably connected to the rotor head 1 over a shaft 3. In the area of the rotor head 1, the rotor blade 6 comprises a connection part 6a that is connected to a pitch motor 4 of a axial pitch control device 5. The pitch motor 4 is on the other side located on the rotor head 1 and is coaxial with the longitudinal axis A of the rotor blade 6 and also to the shaft 3. Therefore, the pitch angle of the rotor blade 6 can be determined by the axial pitch control device 5 via its pitch motor 4. The pitch motor 4 is a servo motor.

The drive shaft 27 comprises an upper section 27a with essentially constant diameter and a lower section 27b that has a connection area with an expanded diameter to fit in a part of the upper section 27a and also elastic elements 10, arranged around the upper section 27a. The elastic elements 10 are connected to the lower section 27b and upper section 27a at their ends. The elastic elements 10 extend themselves outwards from the end of the upper section 27 in an inclined manner to the end of the lower section.

Therefore, the elastic elements 10 allow the drive shaft 27 to bend passively to a certain amount due to forces applied to it. The torque of the main motor 9 can be transmitted via the elastic elements 10 or alternatively, an additional connection between the upper section 27a and lower section 27b is provided that transmits the torque but provides a free scope for bending.

The drive shaft 27 is shown in a neutral position, where the upper section 27a and lower section 27b are coaxial. This is preferably the default position of the drive shaft 27.

## Claims

1. A helicopter, comprising a fuselage (20), at least one electric main motor (9) and a main rotor (25) connected to the main motor (9) by a drive shaft (27), wherein the fuselage (20) comprises at least one cabin (21) and wherein the main rotor (25) comprises a rotor head (1) and at least two rotor blades (6) connected to the rotor head (1) and wherein at least two of the rotor blades (6) have electrically actuated axial pitch control devices (5), **characterised in that** the drive shaft (27) comprises an upper section (27a) connected to the rotor head (1) and a lower section (27b) connected to the main motor (9) and that a flexible joint (7) connects the lower section (27b) and the upper section (27a).

2. The helicopter according to claim 1, **characterised in that** each axial pitch control device (5) comprises at least one pitch motor (4) that is arranged coaxially with a main axle (A) of at least one rotor blade (6).

3. The helicopter according to claims 1 or 2, **characterised in that** the flexible joint (7) is a passive joint with a default position in an unstressed state and that the upper section (27a) and the lower section (27a) are coaxial in the default position.

4. The helicopter according to one of the preceding claims, **characterised in that** the flexible joint (7) comprises at least one elastic element (10) arranged between the upper section and the lower section.

5. The helicopter according to claim 4, **characterised in that** the flexible joint (7) comprises an outer shaft and an inner shaft at least partially arranged inside the outer shaft and that the elastic element (10) is arranged radially between the outer shaft and the inner shaft.

6. The helicopter according to one of the preceding claims, **characterised in that** the helicopter comprises a control unit (8) for controlling the operation of the main motor (9) and of the axial pitch control devices (5) that is connected to the main motor (9) and the axial pitch control devices (5) and to at least one sensor (11, 12).

7. The helicopter according to claim 6, **characterised in that** at least one sensor (11, 12) is a temperature sensor (12) for detecting the ambient air temperature around the helicopter.

8. The helicopter according to claims 6 or 7, **characterised in that** at least one sensor (11, 12) is a speed sensor (11).

9. The helicopter according to one of the preceding claims, **characterised in that** an energy supply device (24) for at least the main rotor (25) is located in the fuselage (20), under a passenger cabin (20).

10. The helicopter according to one of the preceding claims, **characterised in that** the helicopter comprises an autopilot unit (14) and preferably a helicopter stabilization system (15).
